(19)

Europäisches Patentamt
European Patent Office
Office européen des brevets

(11) **EP 4 431 903 A1**

(12) **EUROPEAN PATENT APPLICATION**

(43) Date of publication:
**18.09.2024   Bulletin 2024/38**

(21) Application number: **23161373.8**

(22) Date of filing: **13.03.2023**

(51) International Patent Classification (IPC):
**G01N 1/28** (2006.01)      **G01N 15/14** (2024.01)
**G01N 15/02** (2024.01)

(52) Cooperative Patent Classification (CPC):
**G01N 1/2813; G01N 15/0227; G01N 15/1429;**
**G01N 15/1433;** G01N 2001/282; G01N 2015/012;
G01N 2015/0294; G01N 2015/1006;
G01N 2015/1493; G01N 2015/1497

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Siemens Healthcare Diagnostics, Inc.**
**Tarrytown, NY 10591 (US)**

(72) Inventors:
• **Engel, Thomas**
**73432 Aalen (DE)**

• **Brock, Jens-Peter**
**90579 Langenzenn (DE)**
• **Ilic, Slobodan**
**81547 München (DE)**
• **Boldú, Laura**
**08339 Vilassar de Dalt (ES)**
• **Marquardt, Gaby**
**91353 Hausen (DE)**

(74) Representative: **Siemens Healthineers**
**Patent Attorneys**
**Postfach 22 16 34**
**80506 München (DE)**

(54) **BLOOD SMEAR MONOLAYER DETECTION**

(57)    The present invention relates to a method for the detection of a diagnostically usable red blood cell (RBC) monolayer region in a blood smear preparation or a subsection of the blood smear preparation, comprising the steps: (a) determining the area coverage of RBCs in the blood smear preparation; (b) determining the hemoglobin distribution; (c) determining the presence of non-RBC cells and/or abnormal RBCs; and (d) assigning a diagnostic usability label to a blood smear preparation or a subsection of the blood smear preparation. Also provided is a method for the detection of a diagnostically usable RBC monolayer region in a blood smear preparation, comprising the steps: (a) obtaining a multitude of optical images of a blood smear preparation; (b) classifying each image with respect to the presence of a monolayer area, wherein the classification is performed with an artificial neural network or according to the parameter-based method; (c) generating a heatmap of images according to the presence of diagnostically usable monolayer areas; (d) identifying regions of diagnostically usable monolayer regions, wherein groups of contiguous images are analyzed in the heatmap and combining all contiguous images of diagnostically usable monolayer areas to a panoramic monolayer overview image.

FIG 1

**Description**

TECHNICAL FIELD

The present invention relates to a method for the detection of a diagnostically usable red blood cell (RBC) monolayer region in a blood smear preparation or a subsection of the blood smear preparation, comprising the steps: (a) determining the area coverage of RBCs in the blood smear preparation; (b) determining the hemoglobin distribution; (c) determining the presence of non-RBC cells and/or abnormal RBCs; and (d) assigning a diagnostic usability label to a blood smear preparation or a subsection of the blood smear preparation. Also provided is a method for the detection of a diagnostically usable RBC monolayer region in a blood smear preparation, comprising the steps: (a) obtaining a multitude of optical images of a blood smear preparation; (b) classifying each image with respect to the presence of a monolayer area, wherein the classification is performed with an artificial neural network or according to the parameter-based method; (c) generating a heatmap of images according to the presence of diagnostically usable monolayer areas; (d) identifying regions of diagnostically usable monolayer regions, wherein groups of contiguous images are analyzed in the heatmap and combining all contiguous images of diagnostically usable monolayer areas to a panoramic monolayer overview image.

BACKGROUND

Blood smear analysis allows quantitation and analysis of different types of blood cells including the counting of cells and the detection of morphologic abnormalities that may be indicators of pathologic processes. Blood smear preparation typically requires dropping blood on a glass slide, spreading it, and afterwards staining with the purpose of cell analysis. Blood spreading accordingly produces a gradual decrease of blood thickness throughout the smear which ends with a feathered edge. During smear examination, not all the smear regions may be suitable for the differential cell count and the diagnostic assessment, which is particularly critical for the red blood cell (RBC) morphological evaluation and analysis.

In thick areas of a smear many cells may be clumped or overlapped, which renders the assessment of cell morphology and the determination of the haemoglobin content of red blood cells difficult. Conversely, in those regions close to the edge of the smear, red blood cells may be too much separated from each other so that their central pallor zone is not clear which could lead to erroneous diagnostic results. A preferred and diagnostically and morphologically suitable blood smear has the form of a monolayer, i.e. the red blood cells are well-spread, there is almost nor overlapping and clumping of cells and the red blood cells show clearly a central pallor zone.

Morphological analysis of blood samples remains a crucial starting point for diagnostics, in particular for patients with malignant haematological diseases. Such an analysis is advantageous since blood smear examination is non-invasive, time and cost-effective and allows for the suggestion of an additional, differential diagnosis. Thus, cytomorphology is still an important part of today's and tomorrow's haematological analyses.

The first step in such analyses is to identify the appropriate area of the blood smear for screening, i.e. to discern a monolayer structure. In clinical situations, experts are often required to manually identify the monolayers which activity is generally considered to be tedious, inconsistent, subjective, and statistically biased. Automated systems as marketed for example by Cellavision, e.g. as described in US2016078276, still typically require human intervention.

There is hence a need for improved and automatizable methods for identifying monolayers and evaluating them within blood smears of patient samples.

SUMMARY

The present invention addresses this need and provides in a first aspect a method for the detection of a diagnostically usable red blood cell (RBC) monolayer region in a blood smear preparation or a subsection of the blood smear preparation, comprising the steps: (a) determining the area coverage of RBCs in the blood smear preparation or a subsection of the blood smear preparation with respect to spacing and distance of the cells to neighboring cells; (b) determining the hemoglobin distribution of RBCs in the blood smear preparation or a subsection of the blood smear preparation; (c) determining the presence of non-RBC cells and/or abnormal RBCs in the blood smear preparation or a subsection of the blood smear preparation; and (d) assigning a diagnostic usability label (classification) to a blood smear preparation or a subsection of the blood smear preparation if (i) in step (a) an area coverage is identified with a distance between an RBC and its neighboring cell of about 1.0 to 2.0 RBC diameters; (ii) in step (b) a central pallor region is identified in the RBC, wherein the central pallor region comprises about 25 to 40 % of the RBC diameter; and (iii) in step (c) no non-RBC cell and/or abnormal RBC is identified and/or an identified non-RBC cell and/or abnormal RBC is marked and excluded from further analysis. Further, the present invention provides, in a further aspect, a method for the detection of a diagnostically usable RBC monolayer region in a blood smear preparation, comprising the steps: (a) obtaining a multitude of optical images of a blood smear preparation; (b) classifying each image with respect to the presence of a monolayer area which is diagnostically usable, wherein the classification is performed with (i) an artificial neural network or (ii) according to the parameter-based method described herein; (c) generating a heatmap of images according to the presence of diagnostically usable monolayer areas; (d) identifying regions of diagnostically usable monolayer regions, wherein groups of contiguous images are analyzed in the heatmap generated in step (c); (e) verifying the diagnostically usable monolayer region identified in step (d) by computing density features of the selected images; and (f) combining all contiguous images of diagnostically usable monolayer areas to a panoramic monolayer overview image. These methods advantageously allow to detect diagnostically usable RBC monolayer region in a blood smear preparation which can subsequently be employed in downstream diagnostic tests. The parameter-based and AI-based methods of the present invention accordingly allow for a further assessment automatization which is no longer dependent on the input of a histology or hematological expert. Furthermore, both methods advantageously complement each other, thus allowing for an improvement of results obtained with automated characterization approaches.

In a preferred embodiment of the present invention, the determination of the area coverage of RBCs in the blood smear preparation or subsection of the blood smear preparation with respect to spacing and distance of the cells to neighboring cells comprises the steps: (a) assigning to each cell a tight bounding box; (b) assigning to each cell a center position; (c) determining the diameter and/or area of the cell or bounding box; (d) determining a circularity index; (e) optionally determining further geometrical parameters; (f) identifying one or more immediately adjacent cell(s) within a range of predefined search radiuses; (g) selecting one immediately adjacent cell; (h) determining the distance between the RBC and the immediately adjacent cell; (i) repeating steps (g) and (h) with one or more further immediately adjacent cell(s) identified in step (f); and classifying the area according to a distance criterion, wherein a distance of 1.0 to 2.0 RBC diameters between the RBC and its immediately adjacent cells identifies a diagnostically usable area coverage, wherein at least 75 to 80 % of the measured distances have to be within the range of 1.0 to 2.0 RBC diameters as determined in step (c).

In a further preferred embodiment the determination of the distribution of RBCs in the blood smear preparation or a subsection of the blood smear preparation comprises the steps: (a) assigning to each cell a tight bounding box; (b) determining the contour line of a cell boundary; (c) determining the center of gravity of the cell geometry; (d) determining of a hemoglobin distribution parameter (HDP); and (e) classifying the central pallor region according the HDP, wherein a HDP of about 0.5 to 2.0 identifies a diagnostically usable pallor region.

In a further embodiment said identification of the presence of non-RBC cells and/or abnormal RBCs in the blood smear preparation or a subsection of the blood smear preparation comprises, in addition to steps (3)(a) to (3) (d), the steps: (e) determining the diameter of a cell; (f) determining the curvature value of a cell; and (g) classifying cells as non-RBCs or abnormal cell if the diameter of the cell is > 8.5 $\mu$m or < 6 pm; and/or if the HDP < 0.5 or > 2.0; and/or if the curvature value is >1/3 $\mu$m.

In a further preferred embodiment the cells classified as abnormal are further analyzed to diagnose a disease.

In a further preferred embodiment said artificial neural network is trained with a training dataset generated by a pathologist, hematologist or group of pathologists and hematologists.

In yet another preferred embodiment said classification is a binary classification into diagnostically usable or diagnostically non-usable.

In an additional embodiment the heatmap or the assignment of a diagnostic usability label as mentioned above is based on the binary classification results or wherein the heatmap represents the classification according to the parameter-based method as described herein. It is particularly preferred that the heatmap or classification results highlight the diagnostically usable images or areas.

In another preferred embodiment the identification of diagnostically usable monolayer regions is performed with a sliding window procedure in the group of contiguous images. It is particularly preferred that the identification is performed with a window size of 8 × 8 images.

It is further preferred that areas of overlapping and/or touching diagnostically usable monolayers within the groups of images are eliminated.

In another preferred embodiment the method for the detection of a diagnostically usable red blood cell (RBC) monolayer region in a blood smear preparation or a subsection of the blood smear preparation according to the present invention is performed with a multitude of optical images, wherein the diagnostic usability label assigned to images comprised within the blood smear preparation or a subsection of the blood smear preparation is compared with images of the panoramic monolayer overview image obtained according the method for the detection of a diagnostically usable red blood cell (RBC) monolayer region in a blood smear preparation, wherein the presence of an overlap in both images identifies a preferred diagnostically usable RBC monolayer region.

In a further preferred embodiment the blood smear preparation is obtained with any method that aims to generate a cell monolayer. It is particularly preferred to prepare the blood smear as wedge smear on a microscopic glass slide, by spinning a glass slide in a spinner centrifuge, or in a flow cell.

In a further aspect the present invention relates to the use of the method according to the present invention for the selection of diagnostically usable RBC monolayer regions.

In yet another aspect the present invention relates to a method for the diagnosis of a blood associated disease, comprising (i) identifying at least one diagnostically usable RBC monolayer region in a subject sample blood smear, preferably with the method for the detection of a diagnostically usable red blood cell (RBC) monolayer region as described herein; (ii) identifying abnormal cells within the blood smear, preferably with the method for the detection of a diagnostically usable red blood cell (RBC) monolayer region in a blood smear preparation or a subsection of the blood smear preparation as described herein; (iii) optionally staining the cells with a dye to visualize the molecular structure in the cells in order to identify an abnormal structure, wherein the presence of an abnormal cell and, optionally, the presence of an abnormal molecular structure is indicative for a blood associated disease.

BRIEF DESCRIPTION OF THE DRAWINGS

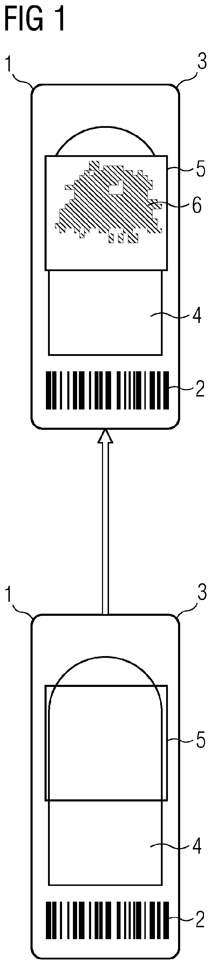

FIG. 1 shows a schematic illustration of an embodiment of the invention. In the lower part of the figure a microscopic glass slide (1) and optionally a cover (3) is shown. The slide may be labeled with a bar code (2). On the slide a blood smear preparation (4) can be seen. An optically scanned region (5) of the blood smear preparation is shown as rectangular structure. Pursuant to an analysis according to the invention (upper part of the figure) a heatmap of images indicating the presence of diagnostically usable monolayer areas (6) is generated.

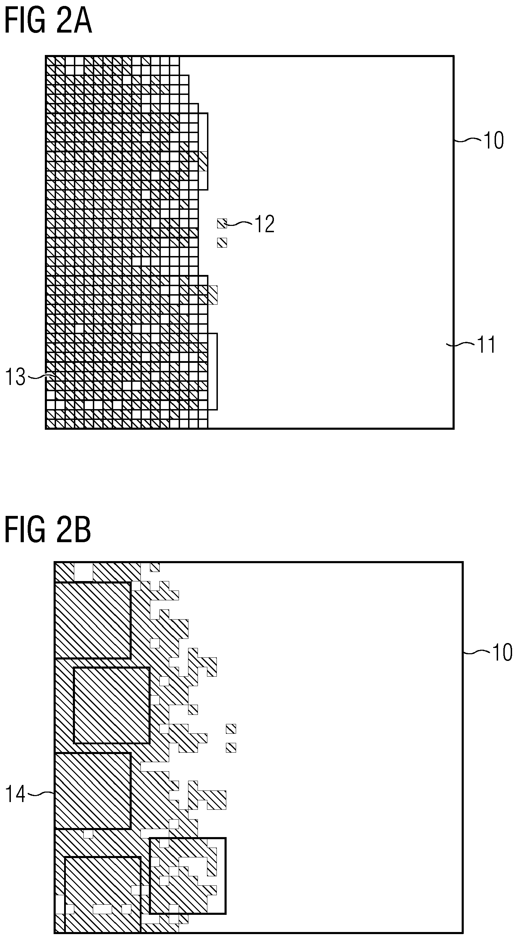

FIG. 2A depicts the localization of diagnostically usable monolayer areas (13) comprising single images with suitable monolayers (12) within the scanned region (10). Also shown are not suitable regions (11). Fig. 2B shows within the scanned region (10) regions of $8 \times 8$ contiguous single images with suitable monolayers (14).

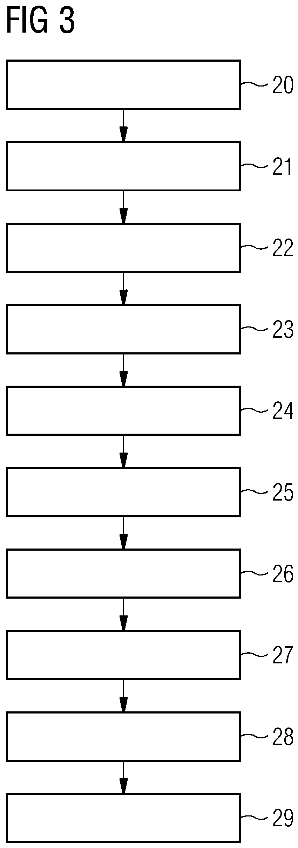

FIG. 3 shows an example of a workflow covering embodiments of the present invention. The exemplary workflow starts with blood sample drawing (20), followed by blood processing (21), blood smear generation (22), blood smear imaging (23), image quality assessment (24), cell detection (25), classification of the monolayer (26), generation of a heatmap (27), image selection and combination (27) and RBC smear analysis (28).

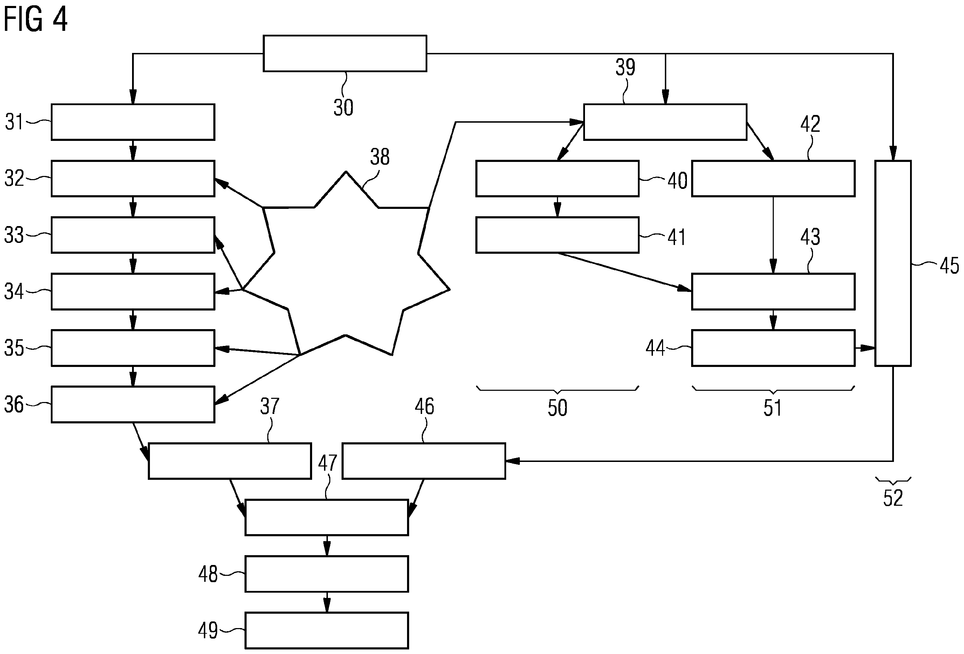

FIG. 4 shows a further example of a workflow covering embodiments of the present invention. The exemplary workflow starts with image capturing (30), followed by cell detection (31), determination of cell properties (32), detection of immediately adjacent neighboring cells and distance determination (33), determination of geometrical parameters of the cell (34), determination of Hu moments exemplary for a group of handcrafted and/or geometrical parameters (35), determination of HDP (36), classification of the smear preparation or subsection thereof as diagnostically usable/non-usable monolayer area (37), input from a domain expert or knowledge database (38), classification of previously captured images or publicly available images of RBCs and monolayers by expert (39), preparation of corresponding training data set for neural networks (40), training of neural networks (41), feeding of trained neural network with test data from captured images (42), preparation of inference of decision by neural network (44), release of preparation model (45), application of captured images on basis of model of step (45), based on result of step (45) classification of the smear preparation or subsection thereof as diagnostically usable/non-usable monolayer area (46), generation of a heatmap (47), image selection and combination (48) and RBC smear analysis (49). Steps (40) and (41) do reflect the training phase (50), steps (42) to (44) reflect the inference phase (51) and step (45) reflects the use phase (52)

DETAILED DESCRIPTION OF EMBODIMENTS

Although the present invention will be described with respect to particular embodiments, this description is not to be construed in a limiting sense.

Before describing in detail exemplary embodiments of the present invention, definitions important for understanding the present invention are given.

As used in this specification and in the appended claims, the singular forms of "a" and "an" also include the respective plurals unless the context clearly dictates otherwise.

In the context of the present invention, the terms "about" and "approximately" denote an interval of accuracy that a person skilled in the art will understand to still ensure the technical effect of the feature in question. The term typically indicates a deviation from the indicated numerical value of $\pm 20$ %, preferably $\pm 15$ %, more preferably $\pm 10$ %, and even more preferably $\pm 5$ %.

It is to be understood that the term "comprising" is not limiting. For the purposes of the present invention the term "consisting of" or "essentially consisting of" is considered to be a preferred embodiment of the term "comprising of". If hereinafter a group is defined to comprise at least a certain number of embodiments, this is meant to also encompass a group which preferably consists of these embodiments only.

Furthermore, the terms " (i) ", "(ii)", "(iii)" or " (a) ", "(b)", "(c)", "(d)", or "first", "second", "third" etc. and the like in the description or in the claims, are used for distinguishing between similar or structural elements and not necessarily for describing a sequential or chronological order.

It is to be understood that the terms so used are interchangeable under appropriate circumstances and that the embodiments of the invention described herein are capable of operation in other sequences than described or illustrated herein. In case the terms relate to steps of a method, procedure or use there is no time or time interval coherence between the steps, i.e. the steps may be carried out simultaneously or there may be time intervals of seconds, minutes, hours, days, weeks etc. between such steps, unless otherwise indicated.

It is to be understood that this invention is not limited to the particular methodology, protocols etc. described herein as these may vary. It is also to be understood that the terminology used herein is for the purpose of describing particular embodiments only and is not intended to limit the scope of the present invention that will be limited only by the appended claims.

The drawings are to be regarded as being schematic representations and elements illustrated in the drawings are not necessarily shown to scale. Rather, the various elements are represented such that their function and general purpose become apparent to a person skilled in the art.

Unless defined otherwise, all technical and scientific terms used herein have the same meanings as commonly understood by one of ordinary skill in the art.

Independent of the grammatical term usage, individuals with male, female or other gender identities are included within the term.

As has been set out above, the present invention concerns in one aspect a method for the detection of a diagnostically usable red blood cell (RBC) monolayer region in a blood smear preparation or a subsection of the blood smear preparation, comprising the steps: (a) determining the area coverage of RBCs in the blood smear preparation or a subsection of the blood smear preparation with respect to spacing and distance of the cells to neighboring cells; (b) determining the hemoglobin distribution of RBCs in the blood smear preparation or a subsection of the blood smear preparation; (c) determining the presence of non-RBC cells and/or abnormal RBCs in the blood smear preparation or a subsection of the blood smear preparation; and (d) assigning a diagnostic usability label (classification) to a blood smear preparation or a subsection of the blood smear preparation if (i) in step (a) an area coverage is identified with a distance between an RBC and its neighboring cell of about 1.0 to 2.0 RBC diameters; (ii) in step (b) a central pallor region is identified in the RBC, wherein the central pallor region comprises about 25 to 40 % of the RBC diameter; and (iii) in step (c) no non-RBC cell and/or abnormal RBC is identified and/or an identified non-RBC cell and/or abnormal RBC is marked and excluded from further analysis (also designated, at certain instances, as parameter-based method).

The method thus comprises a staggered procedure which comprises at least the analysis of geometric and physical properties which only in conjunction allow for a final conclusion on the diagnostic usability of the blood smear preparation of subjection. Accordingly, should the area coverage of RBC be within the predefined margins of diagnostic usability, the absence of a suitable hemoglobin distribution may lead to a diagnostic non-usability. Further, should the area coverage and hemoglobin distribution be within the predefined margins of diagnostic usability the presence of abnormally formed RBCs or of non-RBC cells may lead to diagnostic non-usability of the RBC monolayer region.

The term "diagnostically usable red blood cell monolayer region" as used herein relates to a region of a blood smear preparation which has a form and appearance which allow for diagnostic analyses. For example, the monolayer region comprises no or only a minimal amount of overlapping cells and the hemoglobin distribution of the prepared red blood cells shows a homogeneous and clearly visible pallor region in the central area of the respective RBCs, preferably according to the nominal cell images of medical textbooks. Without wishing to be bound by theory, it is assumed that the optimal assessment area is between the thick area or "heel" of the smear, i.e. the zone where the drop of blood was initially placed and spread, and the very thin "feather edge". In such an ideal area, microscopically, the RBCs are uniformly and singly distributed, wherein only few cells touch or overlap, and have a normal biconcave appearance (i.e. a central pallor). An area that is too thin, in which there are holes in the film or the RBCs look flat, large, and distorted, is not usable for diagnostic analyses. Conversely, are there too many cells, i.e. is the area "too thick" or are the RBCs distorted due to piling of a cell on top of another like a rouleaux, the monolayer is also no usable for diagnostic analyses. Further details would be known to the skilled person or can be derived from suitable textbook references such as Kodak's Hematology: Clinical Principles and Applications, Sixth Edition, 2019, ed. Saunders.

The term "red blood cell" refers to erythrocytes, preferably to hemoglobin containing erythrocytes in a fully developed stage. It does not include other blood cells such as leucocytes or platelets.

The term "blood smear preparation" as used herein refers to any suitable preparation of peripheral blood as known to the skilled person. It is preferred that the blood smear preparation is obtained with any method that aims to generate a cell monolayer, as known to the skilled person. In one embodiment, the blood smear preparation may be obtained as a wedge smear on a microscopic glass slide. Typically, a drop of blood (e.g. 2-3 mm in diameter) obtained from a subject or patient is placed in the center line about 1 cm away from one end of a glass slide (typically having a size of 75 × 25 mm and a thickness of about 1mm) with a stick or glass capillary. The blood may either be directly obtained or be processed, e.g. anticoagulated with EDTA. Subsequently, a spreader slide may be used to spread the blood across the line of contact of two slides. The smear is accordingly produced by movement the spreader slide along the preparation slide. The smear may subsequently be air-dried or fixed with methyl alcohol. Further, the smear may be hematologically stained, e.g. with Romanowski type of staining including also May-Grünwald-Giemsa, Wright-Giemsa or Modified-Wright staining methods.

In a further embodiment the smear is produced by spinning a glass slide in a spinner centrifuge. Typically, the preparation procedure starts with a blood drop either used undiluted or being diluted in an isotonic saline solution. Subsequently, the sample is spun in a microscopic slide centrifuge for a short period of time. As a result, the slide is homogeneously coated with the blood cells, ideally with a suitable monolayer over the whole slide.

In a further embodiment the blood smear may be generated in a flow cell. This approach comprises the steps of filling sample, e.g. a drop of blood into a fluidic system, e.g. as part of a microfluidic chip or system. Subsequently, the drop of blood is transferred into an area of the microfluidic system which is designed for optical inspection. The microfluidic cell may be operated by stopping the fluidic flow when the blood has reached the area of optical inspection or by allowing the cells to sediment on the bottom of the microfluidic cell. In case of a larger number of cells or a larger area to be measured, the flow cell comprising sedimented blood cells may primarily be scanned mechanically through the field of view of an optical system. Alternatively, the flow rate of a cell crossing the area of optical inspection is so low, that there is no relevant cell motion during the exposure time of the camera of the imaging system, avoiding any effect of significant motion blurring. From one exposure to another, a substantial portion of cells can move out of the field of view of the optical system and new cells may enter the field of view due to the slow fluidic flow. Once the blood cells have been imaged, the blood is washed out of the flow cell which than can be cleaned to be used with another drop of blood from a different sample or a different patient.

The method may be performed with blood smear preparations under current microscopic observance or with images of blood smear preparations. Images should preferably have a lateral resolution and/or sampling of sub micrometer in object space, preferably in the range of <200 nm, more preferably in the range < 100 nm of the resulting image. The analysis may be performed on entire blood smear preparations, e.g. a blood smear preparation on a microscope slide, or any subsection thereof or corresponding images thereof. The term "subsection of the blood smear preparation" accordingly means an area which comprises at least 5 to 15 red blood cells. It is preferred that the subsection comprises more than 15 cells, e.g. 50, 100, 150, 200, 300, 400, 500, 1000, 2000 or more or any value in between the mentioned values, preferably between 300 and 500 cells. The size of the subsection and its form may vary. For example, a size of typically 1000 - 5000 × 1000 - 5000 pixels may be used, preferably a subsection comprises a full field of view of the camera as used in the imaging process so that the pixel number equals or approximates the pixel number of the camera. It is preferred to divide a blood smear preparation, or corresponding images thereof, into a group of rectangular subsections which cover the entire preparation. Preferably, the subsections may comprise different fields of view of the camera when imaging the blood smear in a scanning approach with multiple images. Accordingly, also images of subsections covering the entire blood smear preparation or a part of it may be used in the context of the present invention. In certain specific embodiments, if the blood smear is imaged with multiple camera images as subsections in scanning procedure as described herein, neighboring subsection may overlap to a certain degree, e.g. by 0.1, 0.5, 1, 2, 3, 4, 5% or more, so that preferably all cells in the border section are fully covered.

For images of a blood smear preparation a specific image processing of said acquired images may be performed. The term "image processing" as used herein relates to general methods to convert an image into a digital form and to perform operations on it in order to enhance the image and/or to extract useful or desired information. The output of the image processing may be a modified image or characteristics or values associated with the image.

Image processing may comprise, for example, one or more of the following activities, functions or procedures: image enhancement including brightness or contrast adjustment; wavelets and multiresolution processing including image subdividing and pyramidal representation; compression activities including techniques for reducing the storage required to save an image or the bandwidth to transmit it; morphological processing including the extraction of image components required for geometric representation; segmentation, i.e. a partition of an image into its constituent parts or objects; representation of data provided in the segmentation step; description, i.e. extracting attributes from segmented data, including the provision of quantitative data allowing the differentiation of one class of objects from another; object recognition, i.e. the assignment of labels to objects based on its description, stitching, i.e. the generation of a larger consecutive image portion out of a group of subsections. These activities, functions or procedures may preferably be performed in an automatic or programmed manner, e.g. based on the use of suitable computer programs or AI modules.

In an initial step of the method the area coverage of RBCs in the blood smear preparation or a subsection of the blood smear preparation is determined with respect to spacing and distance of the cells to neighboring cells. The term "area coverage" as used herein refers to the percentage or amount of a predefined area of a blood smear preparation or a subsection thereof which comprises, in standard perpendicular optical viewing, red blood cells. Areas where no cells or cellular portions can be detected optically are excluded from the covered area. In case two or more subsections of a blood smear preparation are analyzed, area coverage may be calculated as average area coverage of two or more of the analyzed subsections. For example, an average area coverage may be calculated for 2, 3, 4, 5, 6, 7, 8, 9, 10 or more subsections. The subsections may be adjacent subsections or non-adjacent subsections of a blood smear preparation. It is preferred to use adjacent subsections.

The determination of the area coverage may be performed with any suitable method or algorithm. It is preferred to follow the following procedure:

Initially, a tight bounding box is assigned to a cell (red blood cell of interest) in a blood smear preparation or subsection thereof. Preferably, the assignment is performed with each cell in the blood smear, or more preferably, in the subsection thereof. The bounding box may be an abstract rectangle that acts as a reference point for object detection and produces a collision box for that object. Accordingly, border coordinates of the box and thus of the enclosed cell are stored and used in subsequent procedure steps. In an alternative embodiment, polygonal segmentation may be used for the assignment of cell coordinates. The assignment may be performed with a suitable algorithm or computer program, e.g. VGG image annotator, RectLable or LabelImag.

In a further step a center position is assigned to each cell. The center position is linked to the coordinates of the bounding box or polygonal segments.

In a further step the area of the cell is determined. This can be performed with geometrical calculations on the basis of the tight bounding box, preferably, on the basis of polygonal segments. Alternatively, the area of the tight bounding box may be calculated as approximation of the area of the cell. In a further embodiment, the diameter of the cell may be determined. The diameter may be determined as minimum and maximum diameter in case of asymmetrically formed cells, or as average diameter, e.g. of a 360° diameter detection of the cell with 1-5° measurement steps.

In another step the circularity index of cell may be determined. The circularity index may preferably be calculated as proportion of a long axis of the tight bounding box or cell and a short axis of the tight bounding box or cell.

Optionally, further suitable geometrical parameters of the cell may be determined. The additional geometrical parameters may include, inter alia, classification of a cell into predefined geometrical objects such as a circle, ellipsoid, triangular form, or a rectangular form etc., the circumference of the cell, the presence and number of small cellular extensions as well as the ratio of diameter and area or the ratio of circumference and area of the cell, as well as Hu moments, integrals of local cell curvatures of cells, absolute curvature values, maximum or minimum curvature values, or the range of curvature values measured, as described herein.

In a further step the one or more immediately adjacent cell(s) are identified. The identification may be performed within a range of predefined search radiuses. For example, any cell may be considered as "adjacent cell" if it can be found in a radius of 1 to 10 average cell diameters, e.g. 1, 2, 3, 4, 5, 6, 7, 8, 9 cell average cell diameters or any value in between the mentioned values. The search radius may be defined in reference to most proximate point in the tight bounding box of the cell, or the center position of the cell as determined previously. For adjacent cells information on the coordinates of the tight bounding box and the definition of a center position may already be available. Alternatively, for adjacent cells which have not yet been analyzed one of more of the steps defined above for a cell of interest may be performed, preferably the provision of a tight bounding box and the definition of a center position.

For each direction, e.g. in a range of 1-5° of a 360° spectrum around the cell or bounding box, one immediate adjacent cell is selected, preferably according to distance approximation.

Subsequently, a distance determination between the cell of interest and the immediate adjacent cell in a certain direction is performed. The distance determination may, for example, be performed as vector subtraction based on the coordinates of the bounding boxes or the cell center positions. It is preferred to perform the distance determination starting from the cell center position of a cell to the cell center position the second cell.

The selection and subsequent distance determination may be repeated for each or the majority of directions, e.g. for each 1-20°, preferably for each 5°, 10°, 15° or 20° range, or any value in between the mentioned values, in a 360° spectrum around the cell or bounding box. It is particularly preferred that the distance determination is focused on immediate adjacent cells, i.e. excluding cells which are in direct vicinity to a cell of interest and may be connected in a certain direction by a perpendicular uninterrupted line, but which are in a farther radius than an immediate adjacent cell. These cells may thus be precluded from said determination. The repetition may be performed until all, or a portion of 50 to 95%, e.g. 50, 55, 60, 65 70, 75, 80, 90 or 95% of the immediate adjacent cells within a predefined radius as mentioned above have been analyzed in terms of their distance to the cell of interest. The distance measurement and its repetition may, in specific embodiments, be performed for one or more different search radiuses, e.g. if a nearer search radius does not provide a suitable immediate adjacent cell or a suitable group of equitable immediate adjacent cells.

In a final step the blood smear preparation, preferably a subsection thereof, is classified as being with the predefined margins of diagnostic usability for an RBC monolayer region or as not being within said margin. The classification may, in one embodiment, be based on a distance parameter, i.e. the distance between the RBC of interest and its immediately adjacent cells. Preferably, a blood smear preparation, more preferably a subsection thereof, may be identified as being with the predefined margins of diagnostic usability for an RBC monolayer region if the RBC of interest and its immediately adjacent cells show a distance of about 1.0 to 1.5 or up to 2.0 RBC diameters and if at least 65 %, e.g. 65, 70, 80, 85, 90, 95, 97, 98, 99% of the measured distances are within the range of 1.0 to 1.5 or 2.0 RBC diameters as determined in the diameter measurement step defined above. It is particularly preferred to measure the distance from the cell center position as defined herein to the cell center position of a second cell.

In a further embodiment, the classification may provide a more differentiated grouping, e.g. into the groups of tight packed cell areas, monolayer areas being with the predefined margins of diagnostic usability, as defined above, and sparse cell areas, wherein tight packed cell areas and sparse cell areas are not within the predefined margins of diagnostic usability. A "tight packed cell area" may be given if the measured distances are within a range of 0.7 to 1.0 RBC diameters, or below, as defined above and if more than about 5, 10, 15, 20, 25, 30 % or more of the measured distances are within the range of 0.7 to 1.0 RBC diameters as determined in the diameter measurement step defined above. A "sparse cell area" may be given if the measured distances are within a range of 1.5 or 2.0 to 10 RBC diameters, or above, as defined above and if at least 65 %, e.g. 65, 70, 80, 85, 90, 95, 97, 98, 99% of the measured distances are within the range of 1.5 or 2 to 10 RBC diameters as determined in the diameter measurement step defined above. In an alternative to the binary classification of diagnostic usable and not usable, the classification may alternatively comprise the states suitable monolayer, sparse cell area and tight packed cell area, wherein the usability may follow the order monolayer > sparse cell area > tight packed cell area.

In preferred embodiments, the classification may be performed for several RBCs in a subsection of the blood smear preparation, e.g. for 50, 100, 200, 300, 400, 500, 1000, 2000 or more RBCs, or for all RBCs in said subsection. If in the mentioned group analysis at least about 75% of the RBCs fall with the margin of diagnostic usability the analyzed subsection may be classified being within the margin of diagnostic usability. The subsections may, in certain embodiments, be extended or shifted to different areas of the blood smear preparation. Measurement results obtained in such additional areas may be added to the result of the previously analyses subsection or be calculated individually per subsection. Further extensions of the analysis area may be stopped if a subsection is identified as not being within the margin of diagnostic usability. Subsections being within said margin may accordingly be labeled as potentially diagnostically usable monolayer area. Has an extension of the analysis area been stopped, it may preferably be continued in an adjacent or different subsection, which is to be extended if RBCs are found to have a potentially diagnostically usable monolayer. If not, the analysis may be continued in a further adjacent or different subsection etc. In further embodiments the observation that at least about 75% of the RBCs fall with the margin of diagnostic usability, as described above, may be used as quality indicator of the blood smear.

In a further alternative embodiment the classification of a blood smear preparation or of a subsection thereof may be performed according to statistical means such as histograms, probability functions or density functions. The classification may be based on calculations on the number of distances between cells as mentioned above, in particular considering the cumulative values of distances between the cells in a defined area, e.g. a subsection of the blood smear or the entire blood smear. Accordingly, the number of distances between cells are calculated and compared with a cutoff value, wherein a calculated value below the cutoff indicates that the blood smear preparation or a subsection thereof is not within the margins of diagnostic usability of the monolayer region. For example, the cutoff may at least be 65 %, e.g. 65, 70, 80, 85, 90, 95, 97, 98, 99% of the measured distances between immediately adjacent cells within the range of 1.0 to 1.5 or 2.0 average RBC diameters, or the 60, 75, 80 or 85% quantile of the measured RBC diameters.

Adjacent subsection of the blood smear preparation may be analyzed independently, followed by an addition of obtained cumulative distance values.

The above mentioned procedural steps for the determination of area coverage may be performed in any suitable order. Some of the steps may be omitted or repeated according to necessity and the condition of the blood smear preparation to be analyzed.

Subsequent or parallel to the elucidation of the area coverage, the hemoglobin distribution of the RBCs is determined as further important parameter for the detection of diagnostically usable RBC monolayer regions. The determination of the hemoglobin distribution within a RBC is centrally based on the determination of a central pallor region. The term "central pallor" as used herein refers to a less pronounced, i.e. not fully red, color note or brighter area with less absorption within the central portion of a RBC when observed in standard perpendicular optical viewing in color or greyscale intensity representation, respectively. This central portion or central pallor region typically comprises about 25 to 40 % of the entire cell area or of the cell diameter; in certain pathological cases the value may be lower, i.e. below 25% or higher, i.e. above 40 % of the entire cell area or of the cell diameter. In addition, a central pallor form is typically connected to the typical biconcave cell shape of a RBC. This shape can additionally be used for the identification of cells with central pallor.

As a first procedural step for the determination of the hemoglobin distribution of the RBCs, a tight bounding box is assigned to a cell, preferably to each cell, as mentioned herein above.

Further, a contour line of the cell boundary is determined. The term "contour line" as used herein refers to a function of at least two variables which reflects curve points. The contour line may be determined by segmentation and subsequent transformation into a mathematical function of the RBC in the tight bounding box.

As additional procedural step the center of gravity of a red blood cell is determined. The term "center of gravity" as used herein refers to the geometric property of a cell namely the average location of the hypothetical weight of the cell. For example, center of gravity may be calculated with each pixel enclosed in the contour line of a cell. In further embodiments, the calculation may be performed with gray scale values or absorption values of a pixel.

The determination of the center of gravity may be performed with any suitable method. It is preferred that the determination is performed as calculation of Hu moments of a corresponding cell image. The term "Hu moment" as used herein refers to values calculated in image transformation. It is generally understood as representative of the geometric properties of an object, e.g. of the center of gravity as defined above. Typically, Hu moments are considered to comprise 7 values calculated using central moments invariant to image transformation, e.g. being invariant to translation, scale, rotation or reflection. In a specific embodiment each pixel of an image inside the contour line as defined above may receive a value of 1 and each pixel outside of the contour line may receive a value of 0. Further details may be derived from suitable literature sources such as Huang and Leng, 2010, Proceedings of 2010 2nd International Conference on Computer Engineering and Technology (ICCET, 476-480, Chengdu, China

Alternatively, algorithms may be used which make use only of portions of the pixels on the contour line, thereby improving the accuracy of the calculation.

In a further step a hemoglobin distribution parameter (HDP) is determined. HDP may typically be determined on the basis of the pixel hemoglobin distribution HDM2 within the cell. The calculation is typically based on Formula (1):

$$HDM2 = \sum_{i,j=1}^{ni,nj} I(i,j) * (r(i,j) - r(i0,j0))^2 \qquad (1)$$

Accordingly, based on Formula (2)

$$I(i,j) = I_{Pixel, calc} \qquad (2)$$

a pixel specific value representing the hemoglobin distribution for the respective pixel may be calculated, wherein the value may be zero for all pixel outside a cell.

Further, the averaged hemoglobin content $HDM_{ref}$ for a cell, which is the averaged hemoglobin value for all pixels inside a cell, can be determined. The calculation is typically based on Formula (3):

$$HDM_{ref} = \sum_{i,j=1}^{ni,nj} I(i,j) / \sum_{i,j=1}^{ni,nj} 1 \qquad (3)$$

The HDP value, i.e. the specific hemoglobin distribution value, is then calculated according to Formula (4)

$$HDP = HDM2/HDM_{ref}. \qquad (4)$$

In typical embodiments, a homogenous hemoglobin distribution is indicated by a HDP value close to 1. In case of a biconcave cell with a central pallor region the HDP value may be in range of >1 up to 2, preferably 1.5 to 2.0. Since the HDP values are, inter alia, shape dependent, this could be misleading if taken as sole indicator for usable monolayer structures. Advantageously, the HDP value as defined herein can be used to distinguish cells which are still biconcave and those, which are not. In specific embodiments, certain single cells within the analyzed monolayer may be hyperchromic, e.g. have a HDP outside of the indicated range. In case the immediate adjacent neighboring cells show an HDP within the above mentioned range, the RBC monolayer region may still be considered to be diagnostically usable.

Advantageously the HDP value can be normalized to the analyzed cell and it thus such largely free of biases from general hemoglobin reference values which would otherwise directly influence the HDP value and thus reduce the ability of HDP to allow a distinction between different types of hemoglobin distribution.

The determination of HDP values may be performed for all or a subset of the red blood cells in a blood smear preparation or in a subsection of the blood smear preparation. In certain embodiments, the determining of the HDP value may be confined to areas, which have already been identified as having an area coverage within the margins of diagnostic usability, as defined above. In further embodiments the average HDP value of all cells within a blood smear preparation or subsection thereof may be used as quality indicator of the blood smear by reflecting the number of RBCs which have preserved a biconcave shape.

As optional step the content of hemoglobin in a red blood cell may be determined. Given the fact that hemoglobin absorbs the light on its passage through the cell it is assumed, without wishing to be bound by theory, that the lower the pixel reading in the image of the cell is, the higher the hemoglobin concentration may be.

This further allows to determine the center of gravity. For example, the pixel reading scale may be inverted by subtracting a pixel reading value form an average background value representing the value without absorption. This approach may follow the Formula (5)

$$I_{Pixel, calc} = Background_{Ref} - I_{Pixel, measured} \qquad (5)$$

wherein the value for $Background_{Ref}$ may be any specific value valid for the respective specific sample only or it may be a general value as background reference.

The value is to be determined also for the sample, e.g. on a clear, i.e. non-cellular region of the blood smear preparation. Alternatively, it may be set as a fixed parameter, e.g. based on previous measurement or database values etc.

In an alternative embodiment the exponential nature of absorption may be used as basis for the calculation of the Hu moments. Accordingly, from Formula (6)

$$I(x) = I_0 * exp(-\alpha \ x) \qquad (6)$$

the effective absorption coefficient $\alpha x$ may be derived, which can be considered as value for a normal hemoglobin content in a red blood cell.

The calculation of Hu moments may, in preferred embodiments, be used as measure for the hemoglobin (Hb) content of a cell, e.g. a red blood cell. Accordingly, the Hu moments, e.g. with absorption related values may be used as potential representation for the hemoglobin content of red blood cells.

In a particularly preferred embodiment, a scale invariance of the Hu moments can be achieved by normalizing the Hu moments to a reference moment which is also affected by size in the same way.

Advantageously the feature of Hu moments to be scale invariant for images improves the accuracy of the method since typical and unavoidable small changes between different imaging systems can be omitted. For example, the effective magnification may differ slightly among systems but does, in the context of the present invention, not require a compensation.

In a final procedural step of determining the hemoglobin distribution, the central pallor region is classified according to the determined HDP. Accordingly, the classification may lead to a labelling of cells as being within or outside the margin of diagnostic usability. Preferably, a measured HDP of about 0.5 to 2 is considered to identify a cell as being within the margin of diagnostic usability. HDP values below 0.5 and above 2.0 are considered to identify a cell as being outside the margin of diagnostic usability. HDP values above 1, preferably above 1.3, 1.5 or 2.0 can characterize a cell as being biconcave and not hyperchromic. On the other side, RBCs with an HDP below 1 can be characterized as hyperchromic.

The above mentioned procedural steps for the determination of hemoglobin distribution and hemoglobin content may be performed in any suitable order. Some of the steps may be omitted or repeated according to necessity and the condition of the blood smear preparation to be analyzed.

Subsequent or parallel to the elucidation of the area coverage and the determination of hemoglobin distribution and optionally hemoglobin content, the presence of non-RBC cells and/or abnormal RBCs in the blood smear preparation or a subsection thereof is determined as further important parameter for the detection of diagnostically usable RBC monolayer regions.

As a first procedural step for the determination of the presence of non-RBC cells and/or abnormal RBCs in the blood smear preparation or a subsection thereof a tight bounding box is assigned to a cell, preferably to each cell, as mentioned herein above.

Further, a contour line of the cell boundary is determined, as mentioned herein above.

In addition, the hemoglobin distribution parameter (HDP) may be determined, as explained herein above.

As additional parameter to be determined the present invention envisages the determination of the diameter of cell, preferably as mentioned herein above.

A further parameter to be determined is the curvature of a cell in the blood smear preparation or a subsection thereof. The term "curvature of a cell" as used herein refers to the bending of a cell membrane, in particular in the outer contour line of a cell in the smear, to accommodate different cell morphologies, expressed as geometrical measure. The curvature is typically measured as two principal curvatures c1 and c2 which characterize the shape of a cellular membrane in a 3-dimensional space. The principal curvatures are typically determined according to Formula (7) and (8)

$$c1 = 1/R1 \qquad (7)$$

$$c2 = 1/R2 \qquad (8)$$

wherein R1 is the radius of a corresponding circular fragment 1 and R2 is the radius of a second corresponding circular fragment 2.

The circular fragments may be determined by fitting locally quadratic functions or spheres to the contour line of the cell. Subsequently, the curvature of the respective section of the contour line is determined. Alternatively, a spline function can be fitted locally to the contour line of the cell. The curvature is then determined as second derivative of the spline function at a given position. Further details would be known to the skilled person or can be derived from suitable geometry textbooks.

On the basis of the above mentioned parameters or a subset thereof, a classification of the any cell in the blood smear preparation or subsection thereof may be performed. The classification allows to differentiate between normal and thus diagnostically usable red blood cells on the one hand side and either non-RBCs or abnormal RBCs on the other hand side. A cell is typically considered to be in the group of non-RBC or abnormal RBC if the diameter of the cell is > 8.5 μm or < 6 μm. A further criterion, which can be used additionally or alternatively, is that the HDP is < 0.5 or > 2.0. Yet another criterion, which can be used additionally or alternatively, is that the curvature value is >1/2 pm, >1/2.5 μm or, preferably, >1/3 μm. In a preferred embodiment, a cell is considered to be in the group of non-RBC or abnormal RBC if the diameter of the cell is > 8.5 μm or < 6 μm and if the HDP is < 0.5 or > 2.0; or if the diameter of the cell is > 8.5 μm or < 6 μm and the curvature value is >1/3 pm; or if the HDP is < 0.5 or > 2.0 and the curvature value is >1/3 μm. In a further particularly preferred embodiment a cell is considered to be in the group of non-RBC or abnormal RBC if the diameter of the cell is > 8.5 μm or < 6 μm and if the HDP is < 0.5 or > 2.0 and if curvature value is >1/3 μm.

According to the above mentioned classification it becomes possible to identify certain abnormal cell forms. For example, teardrop cells, arkantocytes or echinocytes can be identified and the regions in which these cells are found may be classified as diagnostically non-usable RBC monolayer region of a blood smear preparation.

In certain specific embodiments additional parameters may be determined such as an indenting index. For example, show cells an increased number of indenting or convex contour sectors, they may also be considered as non-RBC or abnormal RBC. Typically, indenting regions, e.g. in sickle cells or arcantoid cells, have negative curvature, i.e. show concave areas. Accordingly, if the curvature along the contour line of a cell is determined, the curvature value may be integrated along the cell contour line and the integral of the absolute curvature values may additionally be determined. The integral of curvature values with sign may be divided by the absolute value integral. A value of 1 as a result would accordingly indicate that the cell has no indenting regions. The further the calculated value deviates from 1, the larger is the proportion of indenting regions in a cell. The exact values may vary, e.g. according to the shape of the cell. Preferably, an indented cell may be given if the indention index calculated as describe above, is below a value of 1, preferably below 0.95, 0.9 or, more preferably, below 0.8.

This parameter may be used in addition to one or more of the above defined parameters such as diameter, HDP and curvature. The above mentioned procedural steps for the presence of non-RBCs or abnormal RBCs may be performed in any suitable order. Some of the steps may be omitted or repeated according to necessity and the condition of the blood smear preparation to be analyzed.

The present invention envisages that the absence of non-RBC cells and/or abnormal RBCs or the presence of a low number, e.g. below 150, 10%, 20% preferably 5% or lower of non-RBC cells and/or abnormal RBCs may lead to the classification of a RBC monolayer region in a blood smear preparation or a subsection of the blood smear preparation as diagnostically usable. Accordingly, the ratio of non-RBCs and/or abnormal RBCs in comparison to RBCs or normal RBCs may, in certain embodiments, be determined and compared with a cutoff value, wherein a calculated value below the cutoff indicates that the blood smear preparation or a subsection thereof is not within the margins of diagnostic usability of the monolayer region. For example, the cutoff may at least be 80 %, e.g. 80, 85, 90, 95, 97, 98, 99% of the cells are RBCs and/or not-abnormal RBCs. The presence of non-RBCs and/or abnormal RBCs, preferably the presence of a high number of non-RBCs and/or abnormal RBCs, e.g. above 10%, preferably above 15% or more may lead to the classification of a RBC monolayer region in a blood smear preparation or a subsection of the blood smear preparation as diagnostically not usable.

In certain embodiments, certain subsections or areas of the blood smear may be excluded from further analysis and correspondingly be labeled, e.g. in an image metafile or annotation if a certain percentage of non-RBC cells or abnormal cells is encountered. The cutoff-value for an exclusion of a subsection of the blood smear preparation is preferably at more than 15%, more preferably more than 10% of the cells being non-RBCs and/or abnormal RBCs

According to outcome of the above mentioned procedures as to the area coverage, the hemoglobin distribution and optionally hemoglobin content and the presence of non-RBCs or abnormal RBCs a blood smear preparation or subsection thereof may receive the label of diagnostic usability (classification). The label may be provided for entire smear preparations, or parts thereof. For example, should certain subsections comprise a non-usable coverage or comprise a non-usable hemoglobin distribution or comprise non-RBCs or abnormal RBCs, it may be labeled correspondingly.

In a further embodiment, the present invention envisages a specific exclusion of cells and the corresponding areas where these cells are located, which have been identified as non-RBC cell and/or abnormal RBCs. The exclusion may be implemented as digital storage of cell coordinates or area coordinates, which are subsequently used as no-go zones for further diagnostic analysis.

In an additional embodiment, also the presence of areas of coverage which are found to be diagnostically not usable can be labeled digitally, e.g. via their coordinates and excluded from diagnostic analyses as no-go zones.

In yet another embodiment, also the presence of areas which are found to comprise cells which have a hemoglobin distribution considered to be diagnostically not usable can be labeled digitally, e.g. via their coordinates and be excluded from diagnostic analyses as no-go zones.

All no-go zones or specifically excluded cells or areas may be combined, e.g. in an overall summary of the entire blood smear preparation or of subsections thereof.

It is preferred that cells which have been identified as non-RBC and/or as aberrant RBC may, in a further embodiment, be digitally stored with respect to their coordinates in the blood smear preparation or subsection thereof or, preferably, be labeled in an image of the blood smear or subsection thereof. These cells may subsequently be used for specific analyses or diagnostic approaches, i.e. to diagnose a disease, e.g. based on the counting of such cells, the determination of the exact morphology of these cells and, optionally, a comparison with controls or database entries or literature data or expert opinions regarding the amount or form of these cells. The term "disease" as used herein refers to any disease associated and detectable with blood cells, e.g. anemia, cancer, e.g. leukemia, infections, thrombocytopenia.

In a further aspect the present invention relates to a method for the detection of a diagnostically usable RBC monolayer region in a blood smear preparation, comprising the steps: (a) obtaining a multitude of optical images of a blood smear preparation; (b) classifying each image with respect to the presence of a monolayer area which is diagnostically usable, wherein the classification is performed with (i) an artificial neural network or (ii) according to the parameter-based method described herein; (c) generating a heatmap of images according to the presence of diagnostically usable monolayer areas; (d) identifying regions of diagnostically usable monolayer regions, wherein groups of contiguous images are analyzed in the heatmap generated in step (c); (e) verifying the diagnostically usable monolayer region identified in step (d) by computing density features of the selected images; and (f) combining all contiguous images of diagnostically usable monolayer areas to a panoramic monolayer overview image. This method is to be seen as partially alternative approach towards the detection of a diagnostically usable RBC monolayer region in a blood smear preparation. It is accordingly more focused on image recognition and the assessment of suitable training data (also designated, at certain instances, as image-based method).

In a first step an optical image of a blood smear preparation, as described herein above, is obtained. The optical image may be an image of a subsection of the blood smear. Accordingly, to cover the entire blood smear preparation a multitude of optical images is obtained. The size of the optical image is variable. It depends, inter alia, on the size of the blood smear, the microscopic or optical equipment used, the resolution of the camera. It is preferred that one optical image comprises or shows about 100 to 2000 cells. The entire blood smear preparation may cover, for example, an area of about 50 to 100 mm$^2$. It is preferred that this area is separated into a multitude of subsections and corresponding images, preferably 40 to 200 subsections and corresponding images. The number of images may depend on the equipment used, e.g. the magnification, resolution or field of view of the optical equipment.

According to certain embodiments of the present invention the image should preferably have a resolution of 80 to 100 nm per pixel, which is considered suitable for digital scanning. Based on this value and the properties of the optical equipment the number of images may be determined. Exemplarily it may be calculated as follows: assuming a pixel size or pixel pitch of about 4 $\mu$m a magnification of 50x would be required. For the analysis of about 1 $\mu$m$^2$ a number of 100 (-150) pixels should be given, whereas for the analysis of 100 mm$^2$ a number of 10 (- 15) Gpxl should be given. Depending on the optical equipment the number of pictures may be deduced, e.g. if the optical equipment has a resolution of 5 Mpxl a number of about 2000 images or more is required, while a resolution of 20 Mpxl would require about 500 images or more. In typical embodiments, optical equipment with a camera sampling or resolution of 5 to 25 Mpxl may be used.

The images may be obtained in a scanning process wherein a camera or optical device is moved along a predefined coordinate system of rows and columns on the blood smear. The images may be overlapping, for example in any direction, or preferably only in two directions such as the right and upper side of a rectangular. The overlap may be, for example, 0.05, 0.1, 0.5, 1, 2, 3, 4, 5, 10, 15, 20, 40, 50% or more. Alternatively, the images may not be overlapping. Non-overlapping images may preferably have a consecutive border in order to cover all elements of a blood smear preparation.

It is further preferred that the images are provided in an ordered system, e.g. starting at the upmost left corner of the blood smear on a microscope slide, moving to the right upmost corner, switching to the second row on the left side, moving to the right side of the microscope slide of the blood smear preparation etc., with the last image being an image of the lowermost right corner of the blood smear preparation on a microscope slide. In further embodiments different suitable orders or sequences are contemplated. Further, the image form or size or resolution etc. may be adapted to the optical or microscopic or laboratory equipment used.

In further preferred embodiments, the obtained images may be controlled with respect to quality parameters. A corresponding image quality assessment may comprise the determination of one or more of the following parameters: sharpness, i.e. the amount of detail an image; noise, i.e. the random variation of image density; dynamic range, i.e. the range of light levels captured by the optical equipment; tone reproduction, i.e. the ratio between luminescence and brightness; contrast, i.e. the slope of tone reproduction; color accuracy; distortion; vignetting; lateral chromatic aberration; or color moire, i.e. an artificial color banding. The quality assessment may be performed with any suitable method, e.g. full-reference methods, which compares images with reference images of a predefined quality, or a metric based method, wherein extracted metric features are compared, e.g. on the basis of a reference image of a predefined quality. It is preferred to use the full-reference methodology.

The multitude of images to be used for the following assessment steps may preferably be processed as described herein above.

In a first assessment step each image is classified with respect to the presence of a monolayer area which is diagnostically usable. This classification may typically be based on a morphological comparison of the image with an image repository of monolayer areas which have independently been classified by an expert. The term "morphological comparison" as used herein relates to a matching and contrasting activity with respect to one or more of the features of structure, shape, form, size, presence of pattern, optical/visual representation, contrast, color or staining density etc. associated with a cell or group of cells present in the image.

The comparison typically comprises a matching and contrasting of images, preferably images which have been processed as described herein, with images or data that have previously or alternatively been classified into diagnostically usable or non-usable blood smear areas by an expert and which have been stored together with the classification information in an image repository. These stored images may further have undergone an image processing similar or identical to the image processing performed with the images of the blood smear preparation obtained according to the method of the present invention.

It is preferred that said morphological comparison comprises the application of an obtained image of the blood smear preparation to a machine-learning-based method. The concept of "machine-learning" as used within the context of the present invention typically relies on a two-step approach: first, a training phase; and second, a prediction phase. In the training phase, values of one or more parameters of the machine-learning model (MLM) are set using training techniques and training data. In the prediction phase, the trained MLM operates on measurement data. Example parameters of an MLM include: weights of neurons in a given layer of an artificial neural network (ANN) such as a convolutional neural network (CNN); kernel values of a kernel of a classifier etc.

Building an MLM can include the training phase to determine the values of the parameters. It is particularly preferred that the training is performed with images of an image repository of blood smear preparations, in particular monolayers identified in said blood smear preparations. Said images of the repository typically have independently been classified by an expert. The expert may, for example, be a pathologist, histologist or hematologist. The expert may, in further embodiments, also be a group of experts which adjust or harmonize their subjective classification, e.g. a group of pathologists, histologists or hematologists, or a mixed group of different experts. Corresponding results, i.e. labelling of a blood smear preparation area image to the group of diagnostically usable RBC monolayer area or the group of diagnostically non-usable RBC monolayer area/blood smear area are subsequently stored in the image repository, e.g. together with the image. This information can be retrieved and used by the MLM as training set. In specific embodiments, the training data set may be optimized on the basis of, or additionally be complemented with the parameters and/or thresholds of the parameter-based method described herein. This may advantageously lead to a further optimization of the overall classification process.

Building an MLM can generally also include determining values of one or more hyperparameters. Typically, the values of one or more hyperparameters of the MLM are set and not altered during the training phase. Hence, the value of the hyperparameter can be altered in outer-loop iterations; while the values of the parameters of the MLM can be altered in inner-loop iterations. Sometimes, there can be multiple training phases, so that multiple values of the one or more hyperparameters can be tested or even optimized. The performance and accuracy of most MLMs are strongly dependent on the values of the hyperparameters.

Exemplary hyperparameters include: number of layers in a convolutional neural network; kernel size of a classifier kernel; input neurons of an ANN; output neurons of an ANN; number of neurons per layer; learning rate etc.

Various types and kinds of MLMs can be used in the context of the present invention. For example, a novelty detector MLM / anomaly detector MLM, or a classifier MLM may be employed, e.g., a binary classifier. For example, a deep-learning (DL) MLM can be employed: here, features detected by the DL MLM may not be predefined, but rather may be set by the values of respective parameters of the model that can be learned during training.

To build the MLM several techniques may be used. For example, the type of the training may vary with the MLM type. Further, the type of the employed training may vary in different implementations. For example, an iterative optimization could be used that uses an optimization function that is defined with respect to one or more error signals.

Particularly preferred is the use of a pre-trained ResNet50 convolutional neural network with initial transfer learning and later fine tuning.

On the basis of the classification into diagnostically usable RBC monolayer areas and diagnostically non-usable RBC monolayer areas/blood smear areas, in a further step a heatmap is generated for each image according to classification outcome, e.g. showing the two possibly results in a suitable coding such as a color coding.

In a subsequent step regions of diagnostically usable RBC monolayer areas are identified. This identification step comprises the analysis of heatmaps of contiguous images. For example after the analysis of an image, its right or left neighboring or contiguous image is analyzed. The region of diagnostically usable RBC monolayer areas may be extended said further analyzed image if its heatmap corresponds to the first analyzed heatmap etc. This procedure may be performed, in a preferred embodiment, as sliding window procedure in all contiguous images. The window size of the sliding window may have any suitable value. It is preferred to use a window size of $5 \times 5$, $6 \times 6$, $7 \times 7$, $8 \times 8$, $9 \times 9$ or $10 \times 10$ images. Particularly preferred is the usage of $8 \times 8$ images.

In specific embodiments the heatmap analysis procedure by sliding windows is designed to primarily select and order groups of images, e.g. $8 \times 8$ images = 64 images, according to their classification status, e.g. groups which are all classified as diagnostically usable blood smear areas are ordered at a top rank in a list, followed by those which comprise heatmaps of 63 images classified as diagnostically usable blood smear areas etc. This procedure is performed for all images derived from the blood smear preparation. It is preferred that images at identical positions in the ranking list are combined in groups or buckets. Subsequently a non-maximum suppression algorithm is used to eliminate overlapping regions and to retain only non-overlapping regions, typically for each bucket separately. The final assortment of non-overlapping regions may be combined if comprising consecutive images. The number of resulting combined areas may be adapted to user needs, e.g. a user may predefine how many areas within a blood smear preparation shall be defined.

In a further specific embodiment, an additional analysis step may be performed in order to filter touching localized monolayer regions, which could cause duplicated counts of cells during subsequent analyses. This step includes the use of an algorithm based on graph interpretation, i.e. images classified as diagnostically usable are considered as nodes in graphs with the edges representing Euclidian distances between their centers. A conversion to adjacency matrix calculation may be used to determine the presence of touching monolayer regions. The identification of a touching sector may lead to the elimination of an image. Alternatively, identified images may be labeled, preferably comprising data regarding the exact section of the touching.

In a further step the diagnostically usable monolayer region previously identified is verified by computing density features of the selected images. The term "density feature" as used herein refers to the probability function representing the density of a continuous random variable lying between a specific range of values. The analysis may be based on computation with segmented field images belonging to monolayers. Further a support vector machine classifier trained on the same dataset as the above mentioned ANN is used to verify the results of the machine learning heatmap generation as disclosed above. The verification step is preferably used to eliminate errors which might have occurred during the machine learning phase. Further details may be derived from suitable literature sources such as, for example, Jahanifar et al., 2016, 23rd Iranian Conference on Biomedical Engineering and 2016, 1st International Iranian Conference on Biomedical Engineering (ICBME), 2016, 128-133. In a final step of the procedure all contiguous images of diagnostically usable monolayer areas are combined to a panoramic monolayer overview image. The term "contiguous image" as used herein refers to images which are neighboring or adjacent in any direction. However, gaps or lacunae are not present in the panoramic overview image. Should there be a gap or break between images, a new panoramic overview image has to be provided.

The panoramic overview may be used for further diagnostic analyses, e.g. by a pathologist or histologist.

In a particularly preferred embodiment of the present invention, the classification as used in the above described methods is a binary classification with two classes, (i) diagnostically usable and (ii) diagnostically not usable. The usability may refer to different dimensions analyzed, e.g. the entire blood smear preparation, a subsection thereof of any suitable size, or a subsection thereof as reflected by an optical image as defined above. Moreover, within these subsections, cells or groups of cells may be classified as being diagnostically usable or diagnostically not usable. When providing the binary classification, a concomitant highlighting or labeling may be performed, e.g. information on the usability may be stored in metadata or be saved in a database

In a further specific embodiment of the present invention, the parameter-based method described herein and the image-based method described herein are performed with the same multitude of optical images and the results of the parameter-based method and the results of the image-based are compared with respect of diagnostic usability. If the comparison yields an overlap of results, the corresponding image or combination of images is confirmed to be either diagnostically usable or diagnostically not usable. In case the comparison yields a discrepancy of results, images or combinations of images are reclassified as potentially usable or non-usable, preferably the images or combinations of images are excluded from the group of diagnostically usable monolayer region. The comparison of results may also be performed with further monolayer classification methods, e.g. known to the skilled person.

In an additional embodiment, the detected diagnostically usable red blood cell (RBC) monolayer regions may further be inspected by an expert, e.g. a histologist or hematologist to confirm the results.

In an exemplary embodiment, a workflow for the preparation and assessment of RBC blood smears may comprise the following steps, as depicted in Fig. 3: (1) A blood sample may be obtained from a subject or patient; this step is optional and the workflow may also start with blood which is has been obtained or is provided independently. (2) The blood sample is processed, e.g. as described herein. (3) Subsequently, a blood smear is generated, e.g. as described herein. (4) In a further step the blood smear preparation is scanned and images, e.g. of different sizes, different resolution and/or variable overlap are obtained and optionally stored in a database or server. (5) Further, an image quality assessment is performed, as described herein. (6) Subsequently, cells are detected, their geometrical parameters, corresponding distances with neighboring cells and hemoglobin distribution values etc. as described in detail herein above are determined. (7) On the basis of the cell determination step (6) a classification of the blood smear region as diagnostically usable or non-usable monolayer is derived. (7) Classified images are analyzed to generate a heatmap showing clusters of cells or images considered diagnostically usable or non-usable. (8) Contiguous images of diagnostically usable monolayer areas are selected as arrays to yield a panoramic monolayer overview image. (9) The monolayer regions obtained in step (8) are analyzed diagnostically.

The above described workflow may be modified or altered at several points. For example, the workflow may start with images which were previously obtained, processed and assessed. In a further example, the workflow may comprise an alternative steps (6) and (7) which comprises a classification of images with respect to the presence of a monolayer area with an artificial neural network trained with a suitable set of training data as described herein. The workflow may further comprise two alternatives for steps (6) and (7) wherein the classification results are compared and only areas which are found to be in concordance between both classification procedures are used for further workflow steps. Alternatively, in case of discordance, deviating results may be provide to a domain expert such as a histologist or hematologists. In case a domain expert modifies the classification this information may be reintroduced in to the present methodology, e.g. as improved training data set, allowing for a continuous improvement process. This step may be performed iteratively. Also the employment of more than one domain expert is envisaged, e.g. a group of experts with different scientific background.

In a further exemplary embodiment, a workflow for the preparation and assessment of RBC blood smears may comprise the following steps, as depicted in Fig. 4: (1) An image is captured with optical equipment. (2) Cells are detected and a bounding box is defined, as described herein. (3) The diameter of the cell is determined. (4) The immediate adjacent neighboring cells are determined and the distance to these cells is measured. (5) Geometrical parameters of the cell are determined. (6) Hu moments are determined. (7) The HDP value is determined. For steps (3) to (7) input from a domain expert or a corresponding knowledge repository or database may be used for feature definition, optimization, comparison and/or verification purposes. (8) A classification of the image/blood smear preparation is provided, wherein the output may be binary (diagnostically usable or non-usable) or gradual, e.g. certain areas or subsections are excluded from further analysis. As alternative step (2a) the captured image may be used for an expert classification based on previously analyzed training data leading to trained neural network which is used for inferences operations on the basis of the test data set derived from the images obtained in step (1). (3a) The inferred decision is translated into a classification of the image/blood smear preparation, wherein the output may be binary (diagnostically usable or non-usable) or gradual, e.g. certain areas or subsections are excluded from further analysis. (9) Classified images are analyzed to generate a heatmap showing clusters of cells considered diagnostically usable or non-usable. (10) Contiguous images of diagnostically usable monolayer areas are selected as arrays to yield a panoramic monolayer overview image. (11) The monolayer regions obtained in step (10) are analyzed diagnostically.

Also this workflow may be modified or altered at several points. For example, the domain expert comparison may be skipped, classification results may be compared and only areas which are found to be in concordance between both classification procedures may be used for further workflow steps. Alternatively, in case of discordance, deviating results may be provided to a domain expert such as a histologist or hematologists. The option to combine both methods to potentially increase the quality of the classification is considered as particularly advantageous feature of the present invention.

Advantageously, the pre-defined geometric/hemoglobin/cell distance related features as described herein allow to enrich the information used for selecting the blood smear region for final analysis and thus an optimized selection can be made. In addition, this information may also be used and visualized in a heatmap representation of the smear as supplementary information or additional information to produce a heatmap representation with high granularity. Such additional data can, in certain embodiments, can be incorporated in full resolution into the process or in a classified fashion after comparison to the threshold levels as mentioned herein above.

In another aspect the present invention relates to the use of a method as described herein for the selection of diagnostically usable RBC monolayer regions. Further envisaged is the use of a combination of methods for the selection of diagnostically usable RBC monolayer regions, e.g. the parameter-based method and the image-based method as described herein.

In yet another aspect the present invention relates to a method for the diagnosis of a blood associated disease, comprising (i) identifying at least one diagnostically usable RBC monolayer region in a subject sample blood smear, preferably with a method according to the present invention, preferably the parameter-based method and/or the image-based method as define herein and (ii) identifying abnormal cells within the blood smear, preferably with the parameter-based method as defined herein. A "blood associated disease" as mentioned herein may be any disease which is connected with aberrant forms of blood cells, unusual cells in the blood or aberrant numbers of blood cells or a combination thereof. Examples include anemia, cancer, e.g. leukemia, lymphoma, infections and thrombocytopenia.

In a further embodiment, the method may additionally or optionally comprise a step of staining the cells with a dye to identify the molecular structure in the cells. The staining step may be performed with suitable dyes such as acridine orange, 7-AAC, calcein, CFSE, DAPI, Hoechst dye, propidium iodide, resazurin, trypan blue or tetrazolium salts. Staining results may be compared with controls or database entries for healthy or normal cells indicating the presence of abnormal cells or pathologic conditions. Accordingly, the presence of an abnormal cell and, optionally, the presence of an abnormal molecular structure is considered indicative for a blood associated disease. Further envisaged is the provision of a corresponding report on the encountered abnormality and the assumed diagnostic conclusion.

In a further aspect the present invention relates to a computer implemented method for the detection of a diagnostically usable red blood cell (RBC) monolayer region in a blood smear preparation or a subsection of the blood smear preparation. The method comprises steps (a) to (d) and optionally as well as the corresponding sub-steps of the parameter-based method as described above, or steps (a) to (f) of the image-based method as described above. The method may be implemented on any suitable storage or computer platform, e.g. be cloud-based, internet-based, intranet based or present on local computer or cellphones etc.

In another aspect the present invention relates to a data processing device comprising means for carrying out the computer implemented method as defined above. The device comprises means for carrying out any one or more steps of the computer implemented method of the present invention as mentioned herein above. Accordingly, any of the computer-implemented methods described herein may be totally or partially performed with a computer system including one or more processor (s), which can be configured to perform the steps. Accordingly, some of the present embodiments are directed to computer systems configured to perform the steps of any of the computer-implemented methods described herein, potentially with different components performing respective steps or a respective group of steps. Corresponding steps of methods may further be performed at a same time or in a different order. Additionally, portions of these steps may be used with portions of other steps from other methods. Also, all or portions of a step may be optional. Additionally, any of the steps of any of the methods can be performed with modules, circuits, or other means for performing these steps.

Also envisaged is a computer program comprising instructions which, when the program is executed by a computer, cause the computer to carry out any of the computer implemented methods of the invention as defined herein or any one or more computerizable steps of the methods of the present invention as mentioned herein.

Also envisaged is the provision of a computer-readable storage medium comprising a computer program product as defined above. The computer-readable storage medium may be connected to a server element, or be present in a cloud structure, or be connected via internet or intranet to one or more database structures, or client databases etc.

Any of the software components or computer programs or functions described herein may be implemented as software code to be executed by a processor using any suitable computer language such as, for example, Java, Python, Javascript, VB.Net, C++, C#, C, Swift, Rust, Objective-C, Ruby, PHP, or Perl using, for example, conventional or object-oriented techniques. The software code may be stored as a series of instructions or commands on a computer readable medium for storage and/or transmission, suitable media include random access memory (RAM), a read only memory (ROM), a magnetic medium such as a hard-drive, or an optical medium such as a compact disk (CD) or DVD (digital versatile disk), flash memory, and the like. The computer readable medium may be any combination of such storage or transmission devices. Such programs may also be encoded and transmitted using carrier signals adapted for transmission via wired, optical, and/or wireless networks conforming to a variety of protocols, including the Internet. As such, a computer readable medium according to the present invention may be created using a data signal encoded with such programs. Computer readable media encoded with the program code may be packaged with a compatible device or provided separately from other devices (e.g., via internet download). Any such computer readable medium may reside on or within a single computer program product (e.g. a hard drive, a CD, or an entire computer system), and may be present on or within different computer program products within a system or network. A computer system may include a monitor, printer, or other suitable display for providing any of the results mentioned herein to a user.

The following figures are provided for illustrative purposes. It is thus understood that the figures are not to be construed as limiting. The skilled person in the art will clearly be able to envisage further modifications of the principles laid out herein.

**Claims**

1. A method for the detection of a diagnostically usable red blood cell (RBC) monolayer region in a blood smear preparation or a subsection of the blood smear preparation, comprising the steps:

> (a) determining the area coverage of RBCs in the blood smear preparation or a subsection of the blood smear preparation with respect to spacing and distance of the cells to neighboring cells;
> (b) determining the hemoglobin distribution of RBCs in the blood smear preparation or a subsection of the blood smear preparation;
> (c) determining the presence of non-RBC cells and/or abnormal RBCs in the blood smear preparation or a subsection of the blood smear preparation; and
> (d) assigning a diagnostic usability label (classification) to a blood smear preparation or a subsection of the blood smear preparation if

> (i) in step (a) an area coverage is identified with a distance between an RBC and its neighboring cell of about 1.0 to 2.0 RBC diameters;
> (ii) in step (b) a central pallor region is identified in the RBC, wherein the central pallor region comprises about 25 to 40 % of the RBC diameter; and
> (iii) in step (c) no non-RBC cell and/or abnormal RBC is identified and/or an identified non-RBC cell and/or abnormal RBC is marked and excluded from further analysis.

2. The method of claim 1, wherein the determination of the area coverage of RBCs in the blood smear preparation or subsection of the blood smear preparation with respect to spacing and distance of the cells to neighboring cells comprises the steps:

> (a) assigning to each cell a tight bounding box;
> (b) assigning to each cell a center position;
> (c) determining the diameter and/or area of the cell or bounding box;
> (d) determining a circularity index;
> (e) optionally determining further geometrical parameters;
> (f) identifying one or more immediately adjacent cell(s) within a range of predefined search radiuses;
> (g) selecting one immediately adjacent cell;
> (h) determining the distance between the RBC and the immediately adjacent cell;
> (i) repeating steps (g) and (h) with one or more further immediately adjacent cell(s) identified in step (f); and
> (j) classifying the area according to a distance criterion, wherein a distance of 1.0 to 2.0 RBC diameters between the RBC and its immediately adjacent cells identifies a diagnostically usable area coverage, wherein at least 75 to 80 % of the measured distances have to be within the range of 1.0 to 2.0 RBC diameters as determined in step (c).

3. The method of claim 1 or 2, wherein the determination of the distribution of RBCs in the blood smear preparation or a subsection of the blood smear preparation comprises the steps:

> (a) assigning to each cell a tight bounding box;
> (b) determining the contour line of a cell boundary;
> (c) determining the center of gravity of the cell geometry;
> (d) determining of a hemoglobin distribution parameter (HDP); and
> (e) classifying the central pallor region according the HDP, wherein a HDP of about 0.5 to 2.0 identifies a diagnostically usable pallor region.

4. The method of claim 3, wherein the identification of the presence of non-RBC cells and/or abnormal RBCs in the blood smear preparation or a subsection of the blood smear preparation comprises, in addition to steps (3)(a) to (3)(d), the steps:

> (e) determining the diameter of a cell;

(f) determining the curvature value of a cell; an

(g) classifying cells as non-RBCs or abnormal cell if the diameter of the cell is > 8.5 μm or < 6 μm; and/or if the HDP < 0.5 or > 2.0; and/or if the curvature value is >1/3 pm.

5. The method of claim 4, wherein cells classified as abnormal are further analyzed to diagnose a disease.

6. A method for the detection of a diagnostically usable red blood cell (RBC) monolayer region in a blood smear preparation, comprising the steps:

(a) obtaining a multitude of optical images of a blood smear preparation;

(b) classifying each image with respect to the presence of a monolayer area which is diagnostically usable, wherein the classification is performed with (i) an artificial neural network or (ii) according to the method of any one of claims 1 to 5;

(c) generating a heatmap of images according to the presence of diagnostically usable monolayer areas;

(d) identifying regions of diagnostically usable monolayer regions, wherein groups of contiguous images are analyzed in the heatmap generated in step (c);

(e) verifying the diagnostically usable monolayer region identified in step (d) by computing density features of the selected images; and

(f) combining all contiguous images of diagnostically usable monolayer areas to a panoramic monolayer overview image

7. The method of claim 6, wherein the artificial neural network is trained with a training dataset generated by a pathologist, hematologist or group of pathologists and hematologists.

8. The method of any one of claims 1 to 7, wherein the classification is a binary classification into diagnostically usable or diagnostically non-usable.

9. The method of claim 8, wherein the heatmap or the assignment of a diagnostic usability label is based on the binary classification results, or wherein the heatmap represents the classification according to the method of any one of claim 6(ii), preferably highlighting the diagnostically usable images or areas.

10. The method of any one of claims 6 to 9, wherein the identification of diagnostically usable monolayer regions is performed with a sliding window procedure in the group of contiguous images, preferably with a window size of 8 x 8 images.

11. The method of claim 10, wherein areas of overlapping and/or touching diagnostically usable monolayers within the groups of images are eliminated.

12. The method of any one of claims 1 to 4, wherein the method is performed with a multitude of optical images and wherein the diagnostic usability label assigned to images comprised within the blood smear preparation or a subsection of the blood smear preparation is compared with images of the panoramic monolayer overview image obtained according to claims 6 to 11 and wherein the presence of an overlap in both images identifies a preferred diagnostically usable RBC monolayer region.

13. The method of any one of claims 1 to 12, wherein the blood smear preparation is obtained with any method that aims to generate a cell monolayer, preferably as wedge smear on a microscopic glass slide, as monolayer provided by spinning a glass slide in a spinner centrifuge, or as monolayer prepared in a flow cell.

14. Use of the method of any one of claims 1 to 13 for the selection of diagnostically usable RBC monolayer regions.

15. Method for the diagnosis of a blood associated disease, comprising (i) identifying at least one diagnostically usable RBC monolayer region in a subject sample blood smear, preferably with the method of any one of claims 1 to 5 or 7 to 13; (ii) identifying abnormal cells within the blood smear, preferably with the method of any one of claims 1 to 5; (iii) optionally staining the cells with a dye to identify an abnormal molecular structure in the cells, wherein the presence of an abnormal cell and, optionally, the presence of an abnormal molecular structure is indicative for a blood associated disease.

## FIG 1

FIG 2A

FIG 2B

# FIG 3

```
┌─────────────────┐
│                 │──── 20
└─────────────────┘
         │
         ▼
┌─────────────────┐
│                 │──── 21
└─────────────────┘
         │
         ▼
┌─────────────────┐
│                 │──── 22
└─────────────────┘
         │
         ▼
┌─────────────────┐
│                 │──── 23
└─────────────────┘
         │
         ▼
┌─────────────────┐
│                 │──── 24
└─────────────────┘
         │
         ▼
┌─────────────────┐
│                 │──── 25
└─────────────────┘
         │
         ▼
┌─────────────────┐
│                 │──── 26
└─────────────────┘
         │
         ▼
┌─────────────────┐
│                 │──── 27
└─────────────────┘
         │
         ▼
┌─────────────────┐
│                 │──── 28
└─────────────────┘
         │
         ▼
┌─────────────────┐
│                 │──── 29
└─────────────────┘
```

# FIG 4

EP 4 431 903 A1

Europäisches
Patentamt

European
Patent Office

Office européen
des brevets

# EUROPEAN SEARCH REPORT

**Application Number**

EP 23 16 1373

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/156713 A1 (BEREZHNA SVITLANA Y [US] ET AL) 7 June 2018 (2018-06-07) | 1-5, 12-15 | INV.<br>G01N1/28<br>G01N15/14<br>G01N15/02 |
| A | * paragraph [0097] – paragraph [0113] *<br>----- | 6-11 | |
| X | GOVIND DARSHANA ET AL: "Automated erythrocyte detection and classification from whole slide images",<br>JOURNAL OF MEDICAL IMAGING, SOCIETY OF PHOTO-OPTICAL INSTRUMENTATION ENGINEERS, 1000 20TH ST. BELLINGHAM WA 98225-6705 USA,<br>vol. 5, no. 2, 1 April 2018 (2018-04-01), page 27501, XP060136304,<br>ISSN: 2329-4302, DOI: 10.1117/1.JMI.5.2.027501<br>[retrieved on 2018-04-10] | 6-15 | |
| A | * the whole document *<br>----- | 1-5 | |

| TECHNICAL FIELDS SEARCHED (IPC) |
|---|
| G01N |

The present search report has been drawn up for all claims

| Place of search | Date of completion of the search | Examiner |
|---|---|---|
| The Hague | 28 August 2023 | Werth, Jochen |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 16 1373

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2023

| Patent document cited in search report | | Publication date | Patent family member(s) | | Publication date |
|---|---|---|---|---|---|
| US 2018156713 | A1 | 07-06-2018 | EP | 3552148 A1 | 16-10-2019 |
| | | | US | 2018156713 A1 | 07-06-2018 |
| | | | US | 2019301999 A1 | 03-10-2019 |
| | | | WO | 2018106691 A1 | 14-06-2018 |

EPO FORM P0459

For more details about this annex : see Official Journal of the European Patent Office, No. 12/82

**EP 4 431 903 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2016078276 A

### Non-patent literature cited in the description

- Kodak's Hematology: Clinical Principles and Applications. 2019
- **HUANG ; LENG.** *Proceedings of 2010 2nd International Conference on Computer Engineering and Technology (ICCET, 476-480, Chengdu, China,* 2010
- **JAHANIFAR et al.** *23rd Iranian Conference on Biomedical Engineering and 2016, 1st International Iranian Conference on Biomedical Engineering (ICBME),* 2016, 128-133